# EUROPÄISCHE PATENTSCHRIFT

(11) **EP 0 987 450 B1**
(45) Veröffentlichungstag und Bekanntmachung des Hinweises auf die Patenterteilung: **04.12.2002**
(21) Anmeldenummer: 99118225.4
(22) Anmeldetag: 14.09.1999
(51) Int. Cl.: F16B 7/18, F16B 7/02

(54) **Verbindungseinrichtung zum Verbinden von Profilstäben**
Connecting arrangement for profiles
Dispositif de raccordement pour éléments profilés

(30) Priorität: 18.09.1998 DE 29816797 U; 18.09.1998 DE 19842896
(43) Veröffentlichungstag der Anmeldung: 22.03.2000
(73) Patentinhaber: FMS Förder- und Montage-Systeme Schmalzhofer GmbH, 75031 Eppingen-Mühlbach (DE)
(72) Erfinder: Schmalzhofer, Rainer, 75031 Eppingen-Mühlbach (DE)
(74) Vertreter: Clemens, Gerhard, Dr.-Ing.

(56) Entgegenhaltungen:
- EP-A- 0 802 334
- DE-A- 4 244 396
- DE-U- 8 604 195
- US-A- 5 481 842
- US-A- 5 746 535

## Beschreibung

### TECHNISCHES GEBIET

Die vorliegende Erfindung betrifft eine Verbindungseinrichtung zum Verbinden eines ersten Profilstabes, der zumindest eine Nut mit Hinterschneidungflächen aufweist, mit einem Bauteil, insbesondere zum stirnseitigen Anschließen eines zweiten Profilstabes.

Derartige Profilstäbe sind beispielsweise als Aluminiumprofile mit außenliegenden Nuten ausgebildet und werden im industriellen Bereich häufig zu Tragkonstruktionen für Vorrichtungen zusammengefügt.

### STAND DER TECHNIK

Bei der Montage von Aluminiumprofilen ist eine große Anzahl an Verbindungsmöglichkeiten bekannt, bei der mindestens ein Profil, teilweise beide Profile, bearbeitet, d. h. mit Bohrungen oder Fräsungen versehen, werden müssen, damit die Verbindung hergestellt werden kann. Neben den Kosten für die Bearbeitung sind die vorhandenen Verbinderelemente oft schwierig und daher teuer herzustellen. In der Regel wird durch die Profilbearbeitung zudem die Festigkeit der Profile im Anschlußbereich geschwächt. Bei einigen der bekannten Verbindungen ist das Anzugs- bzw. Verbindungsmoment ungleichförmig und daher die Verbindung insgesamt nicht optimal.

Zum Stand der Technik ohne Profil bearbeitung gehören z.B. US-A-5 481 842 und EP-A-0 802 334.

### DARSTELLUNG DER ERFINDUNG

Ausgehend von dem genannten Stand der Technik liegt der vorliegenden Erfindung das technische Problem bzw. die Aufgabe zugrunde, die im Stand der Technik beschriebenen Nachteile zu vermeiden und insbesondere eine Verbindungseinrichtung der eingangs genannten Art anzugeben, bei der eine stabile Verbindung der Profile bzw. Bauteile mit gleichförmigem Anzugs bzw. Haltemoment ohne Profilbearbeitung zu erreichen ist und eine schnelle und damit kostengünstige Montage der Verbindung gewährleistet wird. Eine weitere Aufgabe besteht darin, daß die Verbindungseinrichtung eine Herstellung der Verbindung ermöglicht, ohne daß aufwendige Ausrichttätigkeiten durchgeführt werden müssen. Auch soll die erfindungsgemäße Verbindungseinrichtung gemäß einer weiteren Aufgabe gewährleisten, daß Profile auch nachträglich in eine bestehende Konstruktion eingefügt werden können, ohne daß eine Demontage der bestehenden Konstruktion vorgenommen werden muß.

Die erfindungsgemäße Verbindungseinrichtung ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Verbindungseinrichtung ist demgemäß gekennzeichnet durch einen Grundkörper, der über Befestigungsmittel an dem Bauteil bzw. zweiten Profilstab befestigbar ist und in den ein Hohlraum eingeformt ist, der zumindest an einer Außenseite des Grundkörpers eine Öffnung aufweist, eine Klemmeinheit, die eine erste Formkontureinheit und eine zweite Formkontureinheit aufweist, wobei die zweite Formkontureinheit über die Öffnung einführbar und innerhalb des Hohlraums angeordnet ist, und die erste Formkontureinheit über die Außenfläche des Grundkörpers übersteht und in die Nut des ersten Profilstabes einführbar ist, und Klemmschraubelemente, die in Öffnungen in der Wandung des Grundkörpers gelagert sind, die von außen betätigbar sind und die beim Betätigen klemmend auf die zweite Formkontureinheit der Klemmeinheit einwirken.

Die Verbindung wird in einfacher Art und Weise durch Einschrauben der Klemmschraubelemente hergestellt. Aufwendige Bohr- und Fräsarbeiten entfallen vollständig.

Eine besonders bevorzugte Ausgestaltung zeichnet sich dadurch aus, daß die zweite Formkontureinheit einen Schaft und eine an den Schaft angeformte kegel- oder kegelstumpfförmige Querschnittskontur aufweist.

Korrespondierend mit dieser Ausgestaltung zeichnet sich eine vorteilhafte Weiterbildung dadurch aus, daß die Klemmschraubelemente jeweils aus einer Konusschraube und einer Konusmutter bestehen und die Konusflächen der Konusschraube und Konusmutter beim Verschrauben bereichsweise auf die kegel- bzw. kegelstumpfförmige Querschnittskontur der zweiten Formkontureinheit der Klemmeinheit einwirken, so daß sich die erste Formkontureinheit in der Nut des ersten Profilstabes verklemmt. Durch einfaches Anziehen der Konusschrauben mit der entsprechenden Konusmutter wird die Klemmeinheit angezogen, so daß eine klemmende Verbindung von zwei Profilstäben problemlos erreicht wird.

Hinsichtlich der Handhabung ist es besonders vorteilhaft, den Durchmesser der Öffnung für die Konusmutter so zu wählen, daß die Mutter drehklemmend fixiert ist. Dadurch ergibt sich eine erleichterte Handhabung, da bei der Mutter nicht mit einem Gegenhaltewerkzeug gearbeitet werden muß. Die Bohrung für die Konusmutter ist vorteilhaft im Durchmesser um einige Zehntel Millimeter kleiner als die Mutter selber.

Eine konstruktiv einfache Ausgestaltung, die eine zuverlässige Verbindungswirkung gewährleistet, zeichnet sich dadurch aus, daß insgesamt zwei Klemmschraubelemente mit Konusschraube und Konusmutter außenseitig gegenüberliegend am Übergang zwischen Schaft und kegel- bzw. kegelstumpfförmiger Querschnittskontur der zweiten Formkontureinheit angeordnet sind.

Eine alternative Ausgestaltung, die insbesonders bei kleinen Abmessungen der zu verbindenden Profile eingesetzt wird, zeichnet sich dadurch aus, daß die Öffnungen ein Innengewinde aufweisen und die Klemmschraubelemente als Stiftschraubelemente ausgebildet sind, deren kegel- bzw. kegelstumpfförmiger Endbereich in das Innere des Hohlraums ragt und beim Einschrauben bereichsweise auf die kegel- bzw. kegelstumpfförmige Querschnittskontur der zweiten Formkontureinheit einwirkt, so daß sich die erste Formkontureinheit in der Nut des ersten Profilstabs verspannt.

Um eine problemlose Einfädelung der ersten Formkontureinheit in die Nut des ersten Profilstabes zu gewährleisten, zeichnet sich eine vorteilhafte Ausgestaltung der Erfindung dadurch aus, daß innerhalb des Hohlraums ein elastisches Element vorhanden ist, das auf die Klemmeinheit einwirkt, derart, daß die erste Formkontureinheit elastisch nach außen gedrückt wird, wobei das elastische Element bevorzugt als Federelement ausgebildet ist.

Ein stirnseitiger Anschluß der Verbindungseinrichtung an einen Profilstab kann problemlos dadurch umgesetzt werden, indem das Befestigungsmittel als selbstschneidende Schraube ausgebildet ist, die durch eine Öffnung in der Wandung des Grundkörpers geführt ist und in eine stirnseitig in dem zweiten Profilstab vorhandene Ausnehmung einschraubbar ist.

Eine besonders vorteilhafte Ausgestaltung der Erfindung zeichnet sich dadurch aus, daß an dem Grundkörper Vorsprungeinheiten angeformt sind, deren Breite im wesentlichen der Öffnungsbreite der Nute der zu verbindenden Profilstäbe entspricht und die bei jeweils angesetzter Verbindungseinrichtung bereichsweise formschlüssig in die Öffnung der Nute eingreifen. Durch das Vorsehen von Vorsprungeinheiten am Grundkörper werden beim Verbinden zweier Profilstäbe diese automatisch ausgerichtet, da die Vorsprungeinheiten formschlüssig in die entsprechenden Nute eingreifen. Dadurch entfallen aufwendige Ausrichttätigkeiten vollständig.

Insgesamt ist ein gleichförmiges Anzugs- bzw. Haltemoment ohne Profilbearbeitung problemlos erreichbar, wobei gleichzeitig eine schnelle Verbindung möglich ist, so daß ein wirtschaftlicher Einsatz der Verbindungsreinrichtung gewährleistet werden kann.

Eine vorteilhafte Ausgestaltung zeichnet sich dadurch aus, daß die Außenkontur der Verbindungseinrichtung so gewählt ist, daß sie nicht über die Außenkontur der anzuschließenden Profilstäbe hinausragt.

Um eine Anbindung eines Profilstabes an eine bestehende Rahmenkonstruktion problemlos zu gewährleiten, zeichnet sich eine besonders vorteilhafte Weiterbildung der erfindungsgemäßen Verbindungseinrichtung dadurch aus, daß die Öffnung zum Einführen der Klemmeinheit bis zu einer Kante des Grundkörpers geführt ist und an diese Kante eine weitere Öffnung anschließt, so daß der Hohlraum an zwei aneinandergrenzenden Außenflächen offen ausgebildet ist.

Eine weitere vorteilhafte Ausgestaltung der Erfindung zeichnet sich dadurch aus, daß die Fläche der ersten Formkontureinheit, die mit der Hinterschneidungsfläche der Nut des ersten Profilstabs in Kontakt kommt, eine erhöhte Rauhigkeit oder ein Vorsprungmuster, insbesondere Riffelung oder Ringschneide, aufweist. Mit einer derartigen Ausgestaltung wird bei Bedarf die Eloxalschicht der Profilstäbe durchbrochen und eine auch in diesem Bereich formschlüssige Verbindung erzielt.

Als Material für den Grundkörper wird bevorzugt Alu/Zink-Druckguß eingesetzt, wobei der Körper bevorzugt als Feingußteil ausgebildet ist. Auch das Material Stahl kann zum Einsatz kommen.

Für die Klemmeinheit und die Klemmschraubelemente wird als Material bevorzugt Stahl eingesetzt.

Weitere Ausführungsformen und Vorteile der Erfindung ergeben sich durch die in den Ansprüchen ferner aufgeführten Merkmale sowie durch die nachstehend angegebenen Ausführungsbeispiele.

### KURZE BESCHREIBUNG DER ZEICHNUNG

Die Erfindung sowie vorteilhafte Ausführungsformen und Weiterbildungen derselben werden im folgenden anhand der in der Zeichnung dargestellten Beispiele näher beschrieben und erläutert. Es zeigen:
- Fig. 1: schematische Seiten-Schnittansicht der Verbindung zweier Profilstäbe mit einer Verbindungseinrichtung mit einem Grundkörper, einer Klemmeinheit, Klemmschraubelementen und einem Befestigungsmittel gemäß einem ersten Ausführungsbeispiel,
- Fig. 2: schematische Teilschnitt-Draufsicht auf den Verbindungsbereich gemäß Fig. 1,
- Fig. 3: schematische Perspektivdarstellung der Verbindungseinrichtung gemäß Fig. 1 in Explosionsdarstellung mit stirnseitigem Anschluß an den zweiten Profilstab,
- Fig. 4: schematische Seitenansicht mit Teilschnitt des Verbindungsbereichs gemäß Fig. 1 in Explosionsdarstellung, ergänzt um ein zusätzliches Federelement,
- Fig. 5: schematische Perspektive eines zweiten Ausführungsbeispiels eines Grundkörpers mit zwei Varianten hinsichtlich der Klemmeinheit in Explosionsdarstellung und
- Fig. 6: schematische Perspektive eines dritten Ausführungsbeispiels einer Verbindungseinrichtung mit Stiftschrauben als Klemmschraubelemente, teilweise in Explosionsdarstellung.

### WEGE ZUM AUSFÜHREN DER ERFINDUNG

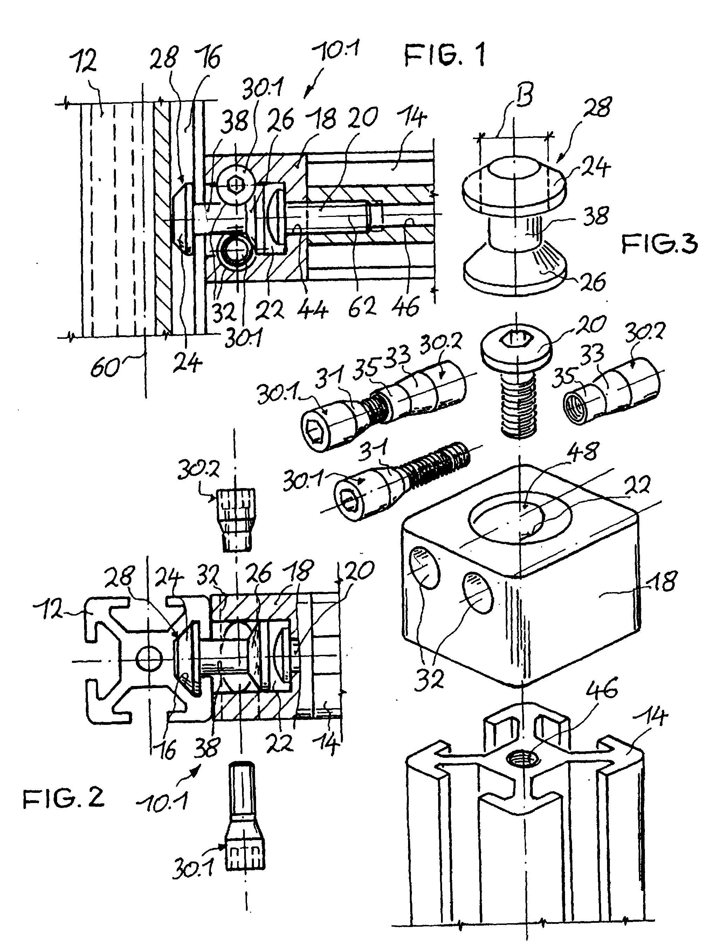

In den Figuren 1 bis 3 ist schematisch der Anschluß eines ersten Profilstabes 12 an einen zweiten Profilstab 14 mittels einer ersten Ausführungsvariante einer Verbindungseinrichtung 10.1 dargestellt. Die Achse 60 des ersten Profilstabes 12 steht hierbei senkrecht auf der Achse 62 des zweiten Profilstabes 14, d.h. der zweite Profilstab 14 ist mit seiner Stirnseite über die Verbindungseinrichtung 10.1 an den ersten Profilstab 12 angeschlossen.

Die Verbindungseinrichtung 10.1 besitzt einen im wesentlichen quader- bzw. würfelförmig ausgebildeten Grundkörper 18, dessen Außenumfangskonturen nicht über die Außenkonturen des ersten und zweiten Profilstabes 12, 14 hinausgehen.

Der erste Profilstab 12 und der zweite Profilstab 14 sind bekannte handelsübliche Aluminiumprofilstäbe, bei denen auf jeder Außenseite eine parallel zur jeweiligen Achsenrichtung verlaufende Nut 16 mit Hinterschneidungsbereich eingeformt ist.

Der Grundkörper 18 weist im Inneren einen zylindrischen Hohlraum 22 auf, der über eine Öffnung 48 von außen her zugänglich ist. Diese Öffnung 48 ist dem ersten Profilstab 12 zugewandt. Gegenüberliegend zur Öffnung 48 ist eine weitere Öffnung 44 an dem Grundkörper vorhanden. Durch diese Öffnung 44 ist von innen nach außen eine selbstschneidende Schraube 20 geführt, die in eine an dem zweiten Profilstab 14 vorhandene zentrale Ausnehmung 46 eingeschraubt ist. Der Schraubenkopf der Schraube 20 weist ein Innensechskantgewinde auf.

Die Verbindungseinrichtung 10.1 besitzt weiterhin eine Klemmeinheit 28, die aus einer ersten Formkontureinheit 24, einer zylindrischen Schafteinheit 38 und einer zweiten Formkontureinheit 26 besteht. Die erste Formkontureinheit 24 und die zweite Formkontureinheit 26 weisen bereichsweise eine Kegelstumpfkontur auf. Die Kontur der ersten Formkontureinheit 24 ist hierbei der Innenkontur der Nut 16 des ersten Profilstabes 12 angepaßt, so daß diese erste Formkontureinheit 24 in die Nut 16 eingefädelt werden kann.

Die Klemmeinheit 28 ist von der Öffnung 48 her in den Hohlraum 22 bereichsweise eingeführt, derart, daß die zweite Formkontureinheit 26 vollständig innerhalb des Hohlraums 22 vorhanden ist und auch die Schafteinheit 38 zum großen Teil innerhalb des Hohlraums 22 vorhanden ist. Der maximale Außendurchmesser der zweiten Formkontureinheit 26 ist nur geringfügig kleiner,als der Innendurchmesser des Hohlraums 22.

Die Klemmeinheit 28 als rotationssymmetrisches Bauteil liegt in der Achse 62 des zweiten Profilstabes 14. Senkrecht zur Achse 62, gemäß Fig. 1 nach oben bzw. nach unten versetzt, sind in der Wandung des Grundkörpers 18 Öffnungen 32 vorhanden, in die Klemmschraubelemente 30.1, 30.2 eingeführt sind. Die Klemmschraubelemente bestehen aus einer Konusschraube 30.1 und einer entsprechenden Konusmutter 30.2. Die Konusschraube 30.1 besitzt zwischen dem Schraubenkopf und dem Gewinde eine Konusfläche 31. Die Konusmutter 30.2 weist ebenfalls eine Konusfläche 33 auf, an die sich ein zylindrischer Mantel 35 anschließt. Die Konusschraube 30.1 und die Konusmutter 30.2 weisen ein von außen zugängliches Innensechskantgewinde auf.

Die erste Formkontureinheit 24 kann auch abgeflacht ausgebildet sein, was in Fig. 3 mit gestrichelten Linien angedeutet ist. Die Breite B im abgeflachten Bereich ist geringfügig kleiner als die Öffnungsbreite der Nut 16, so daß die erste Formkontureinheit senkrecht zur Nut 16 in diese eingeführt und anschließend um 90° gedreht werden kann.

Die Öffnungen 32 für die Klemmschraubelemente 30.1, 30.2 sind hierbei so angeordnet, daß bei eingesetzten Konusschrauben 30.1 und verschraubten Konusmuttern 30.2 die Konusflächen 31 bzw. 33 mit der Konusfläche der kegelstumpfförmigen zweiten Formkontureinheit 26 bereichsweise zur Anlage kommen. Werden die Konusschraube 30.1 und die Konusmutter 30.2 weiter miteinander verschraubt, wird die Klemmeinheit 28 weiter ins Innere des Hohlraums 22 des Grundkörpers 18 gezogen, wodurch die erste Formkontureinheit 24 auf die Hinterschneidungsfläche der Nut 16 des ersten Profilstabes 12 gepreßt wird und gleichzeitig die dem ersten Profilstab 12 zugewandte Außenfläche des Grundkörpers 18 auf den ersten Profilstab 12 gepreßt wird. Dadurch wird eine zuverlässig klemmende Wirkung zwischen der Verbindungseinrichtung 10.1 und dem ersten Profilstab 12 durch einfaches Anziehen der Konusschrauben 30.1 mit den Konusmuttern 30.2 gewährleistet. Die zuverlässige Verbindung zwischen der Verbindungseinrichtung 10.1 und dem zweiten Profilstab 14 wird, wie bereits oben erwähnt, über die selbstschneidende Schraube 20 gewährleistet.

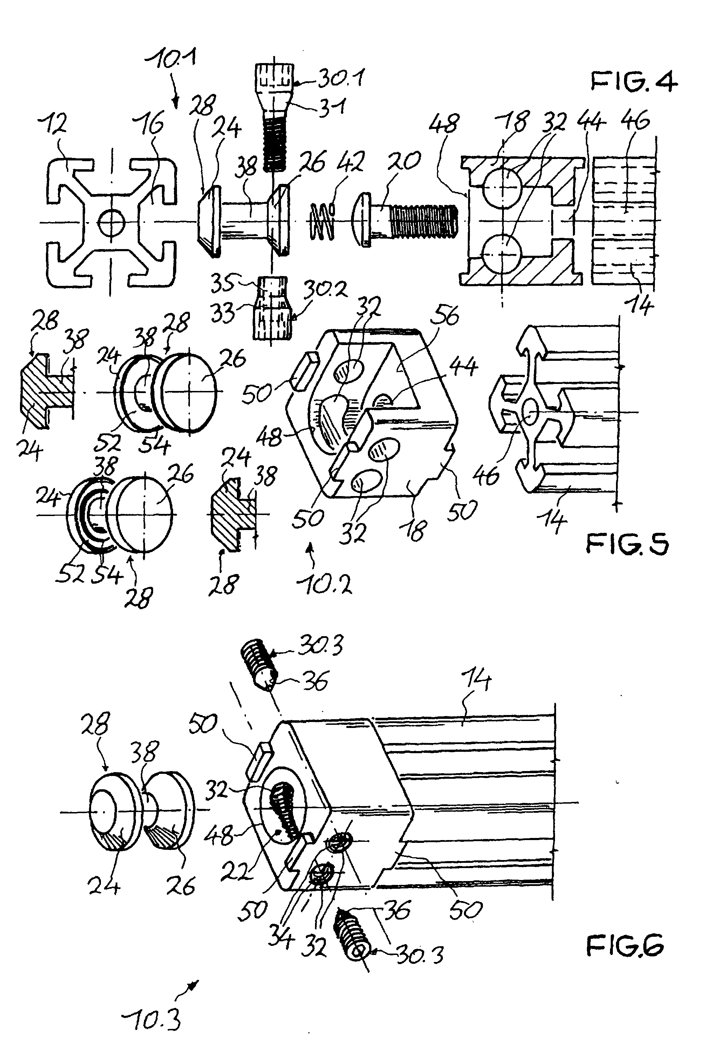

In Fig. 4 ist in einer weiteren Explosionsdarstellung die Verbindungseinrichtung 10.1 nochmals dargestellt, jedoch ergänzt um ein elastisches Element 42, das als Federelement ausgebildet ist und auf die Klemmeinheit 28 derart einwirkt, daß die erste Formkontureinheit 24 elastisch drückend nach außen gedrückt wird und nicht ins Innere des Hohlraums 22 unbeabsichtigt rutschen kann, so daß ein zuverlässiger Einfädelvorgang der ersten Formkontureinheit 24 in die Nut 16 des ersten Profilstabs 12 jederzeit gewährleistet werden kann. Das Federelement 42 stützt sich dabei auf den freien Stirnendbereich der zweiten Formkontureinheit 26 und dem Kopf der selbstschneidenden Schraube 20 ab.

In Fig. 5 ist schematisch eine zweite Ausführungsvariante einer Verbindungseinrichtung 10.2 dargestellt, die problemlos einen nachträglichen Profileinbau an bestehende Rahmen ermöglicht, ohne daß die Rahmenkonstruktion demontiert werden muß. Hierzu wird die Zugänglichkeit des Hohlraums 42 des Grundkörpers 18 erweitert, indem nämlich die Öffnung 48 bis zur benachbarten Kante des Grundkörpers 18 vergrößert wird und daran anschließend an diese Kante eine weitere Öffnung 56 an der anschließenden Außenfläche vorhanden ist, so daß der Hohlraum 22 von zwei angrenzenden Außenflächen her zugänglich ist und die Klemmeinheit 28 problemlos zunächst eingeführt und anschließend durch Verschrauben der oben beschriebenen Klemmschraubelemente 30.1 bzw. 30.2 verspannt werden kann.

Weiterhin sind an den Grundkörper 18 auf den zu den Profilstäben hinweisenden Außenflächen am Rand gegenüberliegend Vorsprungeinheiten 50 angeformt, deren Breite im wesentlichen der Breite der Nute der anzuschließenden Profilstäbe 12, 14 entspricht und die so angeordnet sind, daß bei aufgesetzter Verbindungseinrichtung die Vorsprungeinheiten 50 bereichsweise formschlüssig in die Öffnungsausnehmung der Nute eingreifen. Dadurch entfallen aufwendige Ausrichttätigkeiten beim Verbinden der Profile, da die Ausrichtung und Zentrierung automatisch durch die Vorsprungeinheiten 50 beim Aufsetzen der Verbindungseinrichtung 10.2 auf die Profilstäbe 12, 14 gewährleistet werden.

Im linken Bereich von Fig. 5 sind zwei Ausführungsvarianten einer Klemmeinheit 28 dargestellt. Die obere Ausführungsvariante zeigt eine erste Formkontureinheit 24, bei der eine Ringschneide 54 angeformt ist, und zwar auf der Fläche, die im in die Nut 16 eingesetzten Zustand mit der Hinterschneidungsfläche der Nut 16 in Kontakt kommt. Mittels dieser Ringschneide 54 wird die Eloxalschicht der Profilstäbe durchbrochen und es entsteht eine weitere formschlüssige Verbindung in diesem Bereich. Das untere Ausführungsbeispiel der Klemmeinheit 28 zeigt eine erste Formkontureinheit 24 mit zwei angeformten Ringschneiden (54).

In Fig. 6 ist ein drittes Ausführungsbeispiel einer Verbindungseinrichtung 10.3 dargestellt, das dem Ausführungsbeispiel gem. Fig. 1 bis 3 ähnelt, jedoch ergänzt um die Vorsprungeinheiten 50 gemäß dem Ausführungsbeispiel nach Fig. 5. Bei dem Ausführungsbeispiel nach Fig. 6 sind jedoch keine Konusschrauben und -muttern vorhanden, sondern es werden Stiftschrauben 30.3 eingesetzt, die einen kegelstumpfförmigen Endbereich 36 aufweisen, wobei die Stiftschrauben 30.3 über ein in den Öffnungen 32 vorhandenes Innengewinde 34 in den Grundkörper 18 eingeschraubt werden, derart, daß die konusförmigen Endbereich 36 in das Innere des Hohlraums 22 ragen und bereichsweise mit der Kegelstumpffläche der zweiten Formkontureinheit 26 zur Anlage kommen und bei weiterem Einschrauben die Klemmeinheit 28 insgesamt angezogen wird, wodurch die Verbindung zum ersten Profilstab 12 hergestellt wird.

## Patentansprüche

1. Verbindungseinrichtung (10.1; 10.2; 10.3) zum Verbinden eines ersten Profilstabes (12), der zumindest eine Nut (16) mit Hinterschneidungflächen aufweist, mit einem Bauteil, insbesondere zum stirnseitigen Anschließen eines zweiten Profilstabes (14),
- mit einem Grundkörper (18),
-- der über Befestigungsmittel (20) an dem Bauteil bzw. zweiten Profilstab (14) befestigbar ist,
**gekennzeichnet durch**
- einen enzigen Hohlraum (22) der in den Grundkörper (18) eingeformt ist, der zumindest an einer Außenseite des Grundkörpers (18) eine Öffnung (48) aufweist,
- eine einzige Klemmeinheit (28),
-- die eine erste Formkontureinheit (24) und eine zweite Formkontureinheit (26) sowie eine Schafteinheit dazwischen aufweist, wobei die zweite Formkontureinheit (26) über die Öffnung (48) einführbar und innerhalb des Hohlraums (22) angeordnet ist, und die erste Formkontureinheit (24) über die Außenfläche des Grundkörpers (18) übersteht und in die Nut (16) des ersten Profilstabes (12) einführbar ist, und
- Klemmschraubelemente (30.1, 30.2; 30.3),
-- die in Öffnungen (32) in der Wandung des Grundkörpers (18) gelagert sind,
-- die von außen betätigbar sind und
-- die beim Betätigen klemmend auf die zweite Formkontureinheit (26) der Klemmeinheit (28) einwirken.

2. Einrichtung nach Anspruch 1,
**dadurch gekennzeichnet, daß**
- die zweite Formkontureinheit (26) eine an den Schaft (38) angeformte kegel- oder kegelstumpfförmige Querschnittskontur aufweist.

3. Einrichtung nach Anspruch 2,
**dadurch gekennzeichnet, daß**
- die Klemmschraubelemente jeweils aus einer Konusschraube (30.1) und einer Konusmutter (30.2) bestehen und die Konusflächen (31, 33) der Konusschraube (30.1) und Konusmutter (30.2) beim Verschrauben bereichsweise auf die kegel- bzw. kegelstumpfförmige Querschnittskontur der zweiten Formkontureinheit (26) der Klemmeinheit (28) einwirken, so daß sich die erste Formkontureinheit (24) in der Nut (16) des ersten Profilstabes (12) verspannt.

4. Einrichtung nach Anspruch 3,
**dadurch gekennzeichnet, daß**
- der Durchmesser der Öffnung (32) für die Konusmutter (30.2) so gewählt ist, daß die Konusmutter (30.2) drehklemmend fixiert ist.

5. Einrichtung nach Anspruch 3 und/oder 4,
**dadurch gekennzeichnet, daß**
- insgesamt zwei Klemmschraubelemente (30.1, 30.2) mit Konusschraube und Konusmutter außenseitig gegenüberliegend am Übergang zwischen Schaft (38) und kegel- bzw. kegelstumpfförmiger Querschnittskontur der zweiten Formkontureinheit (26) angeordnet sind.

6. Einrichtung nach Anspruch 2,
**dadurch gekennzeichnet, daß**
- die Öffnungen (32) ein Innengewinde (34) aufweisen und die Klemmschraubelemente (30.3) als Stiftschraubelemente ausgebildet sind, deren kegel- bzw. kegelstumpfförmiger Endbereich (36) in das Innere des Hohlraums (22) ragt und beim Einschrauben bereichsweise auf die kegel- bzw. kegelstumpfförmige Querschnittskontur der zweiten Formkontureinheit (26) einwirkt, so daß sich die erste Formkontureinheit (24) in der Nut (16) des ersten Profilstabs (12) verspannt.

7. Einrichtung nach einem oder mehreren der vorstehenden Ansprüche,
**dadurch gekennzeichnet, daß**
- innerhalb des Hohlraums (22) ein elastisches Element (42) vorhanden ist, das auf die Klemmeinheit (28) einwirkt, derart, daß die erste Formkontureinheit (24) elastisch nach außen gedrückt wird.

8. Einrichtung nach Anspruch 7,
**dadurch gekennzeichnet, daß**
- das elastische Element (42) als Federelement ausgebildet ist.

9. Einrichtung nach einem oder mehreren der vorstehenden Ansprüche,
**dadurch gekennzeichnet, daß**
- das Befestigungsmittel (20) als selbstschneidende Schraube ausgebildet ist, die durch eine Öffnung (44) in der Wandung des Grundkörpers (18) geführt ist und in eine stirnseitig in dem zweiten Profilstab (14) vorhandene Ausnehmung (46) einschraubbar ist.

10. Einrichtung nach einem oder mehreren der vorstehenden Ansprüche,
**dadurch gekennzeichnet, daß**
- an dem Grundkörper (18) Vorsprungeinheiten (50) angeformt sind, deren Breite im wesentlichen der Öffnungsbreite der Nute der zu verbindenden Profilstäbe entsprechen und die bei jeweils angesetzter Verbindungseinrichtung bereichsweise formschlüssig in die Öffnung der jeweiligen Nut eingreifen.

11. Einrichtung nach einem oder mehreren der vorstehenden Ansprüche,
**dadurch gekennzeichnet, daß**
- die Außenkontur der Verbindungseinrichtung so gewählt ist, daß sie nicht über die Außenkontur der anzuschließenden Profilstäbe hinausragt.

12. Einrichtung nach einem oder mehreren der vorstehenden Ansprüche,
**dadurch gekennzeichnet, daß**
- die Öffnung (48) zum Einführen der Klemmeinheit (28) bis zu einer Kante des Grundkörpers (18) geführt ist und an diese Kante eine weitere Öffnung (56) anschließt, so daß der Hohlraum (22) an zwei aneinandergrenzenden Außenflächen offen ausgebildet ist.

13. Einrichtung nach einem oder mehreren der vorstehenden Ansprüche,
**dadurch gekennzeichnet, daß**
- die Fläche (52) der ersten Formkontureinheit (24), die mit der Hinterschneidungsfläche der Nut (16) des ersten Profilstabs (12) in Kontakt kommt, eine erhöhte Rauhigkeit oder ein Vorsprungmuster, insbesondere Riffelung oder Ringschneide (54), aufweist.

14. Einrichtung nach einem oder mehreren der vorstehenden Ansprüche,
**dadurch gekennzeichnet, daß**
- die erste Formkontureinheit (24) entsprechend dem Querschnitt der Nut (16) des ersten Profilstabs (12) eine kegelstumpfartige Form aufweist.

15. Einrichtung nach einem oder mehreren der vorstehenden Ansprüche,
**dadurch gekennzeichnet, daß**
- der Grundkörper (18) aus Alu/Zink-Druckguß, insbesondere als Feingußteil, oder aus Stahl besteht.

16. Einrichtung nach einem oder mehreren der vorstehenden Ansprüche,
**dadurch gekennzeichnet, daß**
- die Klemmeinheit (28) und die Klemmschraubelemente (30.1, 30.2, 30.3) aus Stahl bestehen.

17. Einrichtung nach einem oder mehrern der vorstehenden Ansprüche,
**dadurch gekennzeichnet, daß**
die erste Formkontureinheit (24) beidseitig eine Abflachung aufweist, deren Breite (B) geringfügig kleiner ist als die Öffnungsbreite der Nut (16) des ersten Profilstabs (12).

## Claims

1. Connecting device (10.1; 10.2; 10.3) for connecting a first profile bar (12), which has at least one groove (16) with undercut surfaces, to a component, in particular for connecting a second profile bar (14) at the end face,
- having a basic body (18)
-- which can be fastened to the component or second profile bar (14) via fastening means (20),
**characterized by**
- a single cavity (22) which is formed in the basic body (18) and has at least one opening (48) on an outer side of the basic body (18),
- a single clamping unit (28),
-- which has a first shaped-contour unit (24) and a second shaped-contour unit (26) and also a shank unit in between, the second shaped-contour unit (26) being insertable via the opening (48) and being arranged inside the cavity (22), and the first shaped-contour unit (24) projecting beyond the outer surface of the basic body (18) and being insertable into the groove (16) of the first profile bar (12), and
- clamping screw elements (30.1, 30.2; 30.3),
-- which are mounted in openings (32) in the wall of the basic body (18),
-- which can be actuated from outside and
-- which, upon actuation, act in a clamping manner on the second shaped-contour unit (26) of the clamping unit (28).

2. Device according to Claim 1, **characterized in that** the second shaped-contour unit (26) has a conical or frustoconical cross-sectional contour adapted to the shank (38).

3. Device according to Claim 2, **characterized in that** the clamping screw elements in each case consist of a taper screw (30.1) and a taper nut (30.2), and the taper surfaces (31, 33) of the taper screw (30.1) and taper nut (30.2), during the screwing, act zonally on the conical or frustoconical cross-sectional contour of the second shaped-contour unit (26) of the clamping unit (28), so that the first shaped-contour unit (24) is restrained in the groove (16) of the first profile bar (12).

4. Device according to Claim 3, **characterized in that** the diameter of the opening (32) for the taper nut (30.2) is selected in such a way that the taper nut (30.2) is fixed in a rotationally clamping manner.

5. Device according to Claim 3 and/or 4, **characterized in that** a total of two clamping screw elements (30.1, 30.2) with taper screw and taper nut are arranged opposite one another on the outside at the transition between shank (38) and conical or frustoconical cross-sectional contour of the second shaped-contour unit (26).

6. Device according to Claim 2, **characterized in that** the openings (32) have an internal thread and the clamping screw elements (30.3) are designed as headless set screw elements, the conical or frustoconical end region (36) of which projects into the interior of the cavity (22) and, when being screwed in, acts zonally on the conical or frustoconical cross-sectional contour of the second shaped-contour unit (26), so that the first shaped-contour unit (24) is restrained in the groove (16) of the first profile bar (12).

7. Device according to one or more of the preceding claims, **characterized in that** there is an elastic element (42) inside the cavity (22), this elastic element (42) acting on the clamping unit (28) in such a way that the first shaped-contour unit (24) is pressed elastically outwards.

8. Device according to Claim 7, **characterized in that** the elastic element (42) is designed as a spring element.

9. Device according to one or more of the preceding claims, **characterized in that** the fastening means (20) is designed as a self-tapping screw which is passed through an opening (44) in the wall of the basic body (18) and can be screwed into a recess (46) which is in the second profile bar (14) at the end face.

10. Device according to one or more of the preceding claims, **characterized in that** projection units (50) are integrally formed on the basic body (18), which projection units (50) essentially correspond in width to the opening width of the grooves of the profile bars to be connected and, when the respective connecting device is attached, engage zonally in the opening of the respective groove in a positive-locking manner.

11. Device according to one or more of the preceding claims, **characterized in that** the outer contour of the connecting device is selected in such a way that it does not project beyond the outer contour of the profile bars to be connected.

12. Device according to one or more of the preceding claims, **characterized in that** the opening (48) for the insertion of the clamping unit (28) is directed up to an edge of the basic body (18) and a further opening (56) adjoins this edge, so that the cavity (22) is designed to be open at two adjacent outer surfaces.

13. Device according to one or more of the preceding claims, **characterized in that** the surface (52) of the first shaped-contour unit (24) which comes into contact with the undercut surface of the groove (16) of the first profile bar (12) has increased roughness or a projecting pattern, in particular ribbing or an annular cutting edge (54).

14. Device according to one or more of the preceding claims, **characterized in that** the first shaped-contour unit (24) has a frustoconical shape in accordance with the cross section of the groove (16) of the first profile bar (12).

15. Device according to one or more of the preceding claims, **characterized in that** the basic body (18) is made of an aluminium/zinc diecasting, in particular as a precision cast part, or of steel.

16. Device according to one or more of the preceding claims, **characterized in that** the clamping unit (28) and the clamping screw elements (30.1, 30.2, 30.3) are made of steel.

17. Device according to one or more of the preceding claims, **characterized in that** the first shaped-contour unit (24) has a flat on both sides, the width (B) of this flat being slightly smaller than the opening width of the groove (16) of the first profile bar (12).

## Revendications

1. Dispositif de raccordement (10.1; 10.2; 10.3) pour raccorder une première barre profilée (12), qui présente au moins une rainure (16) avec des faces de contre-dépouille, à un élément de construction, notamment pour le raccordement frontal d'une deuxième barre profilée (14), ledit dispositif comportant un corps de base (18) qui peut être fixé par un moyen de fixation (20) sur l'élément de construction ou la deuxième barre profilée (14),
**caractérisé par**
- une unique cavité (22), qui est formée dans le corps de base (18) et qui présente une ouverture (48) au moins sur un côté extérieur du corps de base (18),
- une unique unité de serrage (28), qui présente une première partie façonnée (24) et une deuxième partie façonnée (26) ainsi qu'une partie de tige entre elles, la deuxième partie façonnée (26) pouvant être introduite par l'ouverture (48) et étant disposée dans la cavité (22), et la première partie façonnée (24) dépassant de la surface extérieure du corps de base (18) et pouvant être introduite dans la rainure (16) de la première barre profilée (12), et
- des éléments vissés de serrage (30.1, 30.2; 30.3),
- qui sont montés dans des ouvertures (32) dans la paroi du corps de base (18),
- qui peuvent être actionnés de l'extérieur, et
- qui, lorsqu'ils sont actionnés, agissent en serrage sur la deuxième partie façonnée (26) de l'unité de serrage (28).

2. Dispositif selon la revendication 1, **caractérisé en ce que** la deuxième partie façonnée (26) présente un contour de section conique ou tronconique formé sur la tige (38).

3. Dispositif selon la revendication 2, **caractérisé en ce que** les éléments vissés de serrage sont chacun constitués d'une vis conique (30.1) et d'un écrou conique (30.2), et les faces coniques (31, 33) de la vis conique (30.1) et de l'écrou conique (30.2) agissent, lors du vissage, sectoriellement sur le contour de section conique ou tronconique de la deuxième partie façonnée (26) de l'unité de serrage (28), de sorte que la première partie façonnée (24) est serrée dans la rainure (16) de la première barre profilée (12).

4. Dispositif selon la revendication 3, **caractérisé en ce que** le diamètre de l'ouverture (32) pour l'écrou conique (30.2) est choisi de telle sorte que l'écrou conique (30.2) est bloqué en rotation.

5. Dispositif selon la revendication 3 et/ou 4, **caractérisé en ce que** deux éléments vissés de serrage (30.1, 30.2) au total, avec chacun une vis conique et un écrou conique, sont disposés extérieurement en vis-à-vis à la transition entre la tige (38) et le contour de section conique ou tronconique de la deuxième partie façonnée (26).

6. Dispositif selon la revendication 2, **caractérisé en ce que** les ouvertures (32) présentent un filetage intérieur (34) et les éléments vissés de serrage (30.3) sont réalisés sous forme de vis sans tête dont la région terminale (36) conique ou tronconique dépasse à l'intérieur de la cavité (22) et, lors du vissage, agit sectoriellement sur le contour de section conique ou tronconique de la deuxième partie façonnée (26), de sorte que la première partie façonnée (24) est serrée dans la rainure (16) de la première barre profilée (12).

7. Dispositif selon une ou plusieurs des revendications précédentes, **caractérisé en ce qu'**un élément élastique (42) est présent dans la cavité (22), élément qui agit sur l'unité de serrage (28) de telle sorte que la première partie façonnée (24) est pressée élastiquement vers l'extérieur.

8. Dispositif selon la revendication 7, **caractérisé en ce que** l'élément élastique (42) est réalisé sous forme d'élément de ressort.

9. Dispositif selon une ou plusieurs des revendications précédentes, **caractérisé en ce que** le moyen de fixation (20) est réalisé sous forme de vis autotaraudeuse, qui est dirigée à travers une ouverture (44) dans la paroi du corps de base (18) et qui peut être vissée dans un évidement (46) présent sur le côté frontal de la deuxième barre profilée (14).

10. Dispositif selon une ou plusieurs des revendications précédentes, **caractérisé en ce que** des parties saillantes (50) sont formées sur le corps de base (18), parties dont la largeur correspond sensiblement à la largeur d'ouverture des rainures des barres profilées à raccorder et qui, lorsque le dispositif de raccordement est respectivement mis en place, s'engagent sectoriellement en engagement positif dans l'ouverture de la rainure respective.

11. Dispositif selon une ou plusieurs des revendications précédentes, **caractérisé en ce que** le contour extérieur du dispositif de raccordement est choisi de telle sorte qu'il ne dépasse pas du contour extérieur des barres profilées à raccorder.

12. Dispositif selon une ou plusieurs des revendications précédentes, **caractérisé en ce que** l'ouverture (48) pour l'introduction de l'unité de serrage (28) est dirigée jusqu'à un bord du corps de base (18) et une autre ouverture (56) se raccorde à ce bord, de sorte que la cavité (22) est réalisée ouverte sur deux faces extérieures contiguës.

13. Dispositif selon une ou plusieurs des revendications précédentes, **caractérisé en ce que** la face (52) de la première partie façonnée (24) qui entre en contact avec la face de contre-dépouille de la rainure (16) de la première barre profilée (12) présente une aspérité en relief ou un dessin en saillie, notamment un striage ou un tranchant annulaire (54).

14. Dispositif selon une ou plusieurs des revendications précédentes, **caractérisé en ce que** la première partie façonnée (24) présente une forme tronconique correspondant à la section de la rainure (16) de la première barre profilée (12).

15. Dispositif selon une ou plusieurs des revendications précédentes, **caractérisé en ce que** le corps de base (18) est réalisé en alliage aluminium/zinc moulé sous pression, notamment sous forme de pièce moulée de précision, ou en acier.

16. Dispositif selon une ou plusieurs des revendications précédentes, **caractérisé en ce que** l'unité de serrage (28) et les éléments vissés de serrage (30.1, 30.2; 30.3) sont réalisés en acier.

17. Dispositif selon une ou plusieurs des revendications précédentes, **caractérisé en ce que** la première partie façonnée (24) présente de part et d'autre un méplat dont la largeur (B) est légèrement inférieure à la largeur d'ouverture de la rainure (16) de la première barre profilée (12).
